Europäisches Patentamt

European Patent Office

Office européen des brevets

(11) Publication number : **0 472 436 A2**

(12) # EUROPEAN PATENT APPLICATION

(21) Application number : **91307756.6**

(22) Date of filing : **22.08.91**

(51) Int. Cl.⁵ : **B32B 5/28,** B32B 27/12,
B32B 27/32, B32B 31/20

(30) Priority : **23.08.90 JP 223361/90**

(43) Date of publication of application :
**26.02.92 Bulletin 92/09**

(84) Designated Contracting States :
**AT CH DE ES FR GB IT LI**

(71) Applicant : **SOMAR CORPORATION**
**11-2, Ginza 4-chome Chuo-ku**
**Tokyo 104 (JP)**

(72) Inventor : **Moriguchi, Kazutomo**
**8-29-29 Aoyagi**
**Soka-shi, Saitama-ken (JP)**
Inventor : **Sekiguchi, Ikuo**
**2-9-12 Kurihara**
**Kuki-shi, Saitama-ken (JP)**
Inventor : **Nakamura, Atumi**
**2-3-29 Tsukushino**
**Abiko-shi, Chiba-ken (JP)**

(74) Representative : **Allam, Peter Clerk**
**LLOYD WISE, TREGEAR & CO. Norman House**
**105-109 Strand**
**London WC2R 0AE (GB)**

(54) Improved composite material.

(57)   A composite material is disclosed in which an ultra-high molecular weight polyethylene top layer is backed with a non-woven fabric using a polyolefin resin as an adhesive layer disposed therebetween, and in which a portion of the non-woven fabric is impregnated with the polyolefin resin. The adhesive layer is formed by extruding a molten mass of the polyolefin resin through a die between the top and backing layers and passing these layers through a pair of heated, pressure rollers. The non-woven fabric surface of the composite material is preferably treated with flame or UV-rays. The composite material is suitably used as a skid lining sheet to be applied to, for example, skis.

EP 0 472 436 A2

Jouve, 18, rue Saint-Denis, 75001 PARIS

This invention relates generally to a composite material and, more specifically, to a composite sheet suitable as a lining material for imparting slippage to the surface to which the composite sheet is applied. The present invention is also directed to a process for the production of such a composite sheet material.

The high slipping property of a shaped body, such as a sheet, of an ultra-high molecular weight polyethylene (hereinafter referred to as UHPE for brevity) allows the use thereof as a material for lining a surface which is subjected to sliding contact.

Because of its low surface energy, however, UHPE presents a difficulty in being bonded to a material to be lined. To cope with this problem, Japanese Published Unexamined Patent Application No. 62-204,938 proposes a method in which a sheet of UHPE is overlaid with a layer of high density polyethylene powder and a non-woven fabric, and the resulting sheet is heated and pressed at 140-170 °C with a roller to melt the powder and to obtain an integral laminate. The laminate, however, has been found to be unsatisfactory with respect to the bonding strength between the UHPE sheet and the polyethylene layer, bonding strength between the non-woven fabric sheet and a surface to which the laminate is bonded with an adhesive, and flatness.

The present invention has been made to solve the above problem in the conventional composite material. In accordance with one aspect of the present invention, there is provided a composite material comprising:

a first layer of a non-woven fabric;

a second layer provided on one of the opposite two surfaces of said first layer and formed of the same non-woven fabric as that of said first layer, said second layer being impregnated throughout with a polyolefin resin having an intrinsic viscosity of 3-10, wherein the total thickness of said first and second layers is in the range of 0.1-1 mm with said second layer having a thickness of 10-90 % of the total thickness;

a third layer provided on said second layer and formed of the same polyolefin resin as that of said second layer, wherein the total thickness of said second and third layers is in the range of 0.1-2 mm; and

a fourth layer provided over said third layer and formed of an ultra-high molecular weight polyethylene having an intrinsic viscosity of at least about 12, said fourth layer having a thickness in the range of at least 0.2 mm.

In another aspect, the present invention provides a process for the production of a composite material, comprising the steps of:

(a) preheating an ultra-high molecular weight polyethylene sheet having opposite two, first and second surfaces such that said first surface thereof has a temperature of 70-140 °C;

(b) providing a sheet of a non-woven fabric having opposite two, first and second surfaces;

(c) extruding a molten polyolefin resin having a temperature of 170-250 °C through a die to form an extruded layer of the polyolefin resin and feeding the extruded layer between said preheated sheet and said sheet of a non-woven fabric to obtain a laminate in which said extruded layer is in contact with said first surface of said ultra-high molecular weight polyethylene sheet and said first surface of said nonwoven fabric sheet; and

(d) feeding said laminate to a pressing zone defined by a pair of first and second rollers, wherein the surface of said first roller has a temperature of 70-140 °C and is brought into pressure contact with said second surface of said non-woven fabric sheet and the surface of said second roller has a temperature of 40-150 °C and is brought into pressure contact with said second surface of said ultra-high molecular weight polyethylene sheet, so that said ultra-high molecular weight polyethylene sheet and said non-woven fabric sheet are bonded with said polyolefin resin layer to form a composite sheet in which a portion of said polyolefin resin layer is anchored in said non-woven fabric sheet.

The composite sheet material according to the present invention exhibits high sliding or slipping property because of the top, UHPE layer thereof and can provide firm bonding between the composite sheet and a surface to which it is applied because of the back non-woven fabric layer. The intermediate layer formed of a polyolefin resin is anchored in the non-woven fabric layer and can provide tight bonding between the fabric layer and the top, UHPE layer. Additionally, because of the presence of the fabric layer, the composite sheet material can exhibit sound-proof property, cushioning property and heat-insulating property. Thus, the composite sheet material of the present invention can be suitably utilized in various applications, for example, as a lining material for hoppers and shoots in which powder is to be contained, as a skid lining material for skis, skids and playground slides, and as a lining material for guide rails and conveyer belts.

The present invention will now be described in detail below with reference to the accompanying drawings, in which:

Fig. 1 is a cross-sectional view schematically showing a composite sheet according to the present invention; and

Fig. 2 a schematic view showing an apparatus suitable for carrying out the process of the present invention.

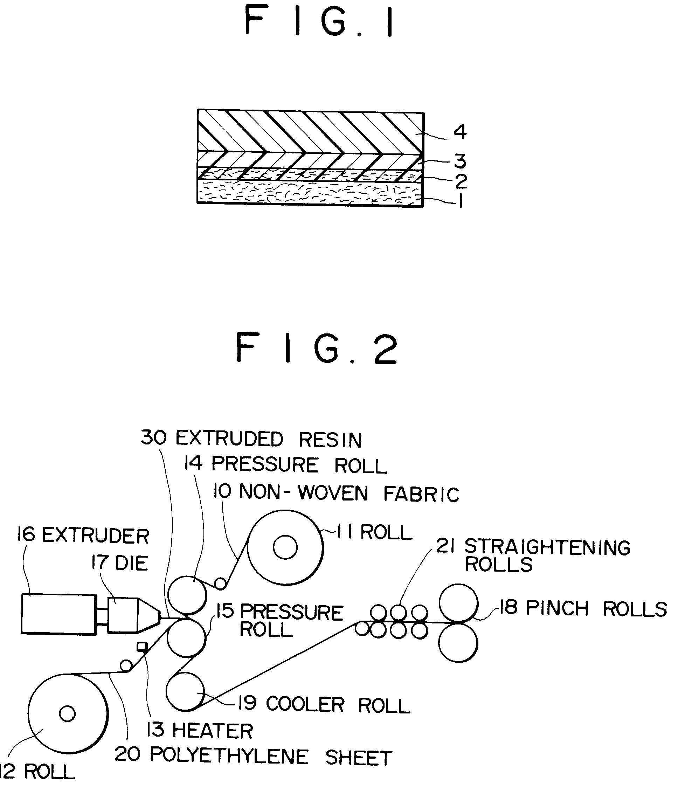

Referring now to the drawings, first to Fig. 1, the composite sheet material according to the present invention includes a first layer 1 formed of a non-woven fabric. The nonwoven fabric may be formed of a natural organic fiber, a synthetic organic fiber or an inorganic fiber. The use of a synthetic fiber such as a polyester fiber, a polyamide fiber, a polyvinyl alcohol fiber or a polyethylene fiber is preferred for reasons of water-proofing property and light weight. As described hereinafter, in a preferred embodiment of the composite material according to the present invention, the exposed surface of the first, non-woven fabric layer 1 is flame-treated so as to improve adhesive strength between the first layer 1 and a surface to which the composite material is bonded with an adhesive agent. The use of a synthetic fiber is also desirable to obtain the benefit of the flame treatment.

Further, for reasons of obtaining excellent mechanical strengths, it is preferred that the non-woven fabric have a delamination strength of at least 1 kg per 25 mm width and a weight of 20-150 g/m². The delamination strength is measured as follows: Two strips (width: 25 mm) of sample sheets are bonded with each other with a double coated, pressure sensitive adhesive tape. The bonding is effected by reciprocally passing the two strips, between which the adhesive tape is sandwiched, through a nip (pressure: 2 kg) of two pressure rolls. After 15 minutes from the bonding, the two strips are drawn in opposite directions for peeling off from each other at a drawing rate of 20 mm/minute. The peel strength represents the delamination strength.

Provided over the first, fabric layer 1 is a second layer 2 which is formed of the same non-woven fabric as that of the first layer 1 but which is further impregnated throughout with a polyolefin resin having an intrinsic viscosity of 3-10. The term "intrinsic viscosity" used in the present specification is referred to as that measured by a dekalin solution method at 135 °C. The non-woven fabrics constituting the first and second layers are generally continuous and form a single layer.

The polyolefin resin to be used for the second layer 2 may be a polyolefin homopolymer or a mixture of a polyolefin homopolymer with a copolymer of an olefin and a copolymerizable monomer. Especially preferred polyolefin homopolymer is a high density polyethylene. Illustrative of suitable copolymers are ethylene/α-olefin copolymers, ethylene/vinyl acetate copolymers, ethylene/acrylate copolymers, olefin/monocarboxylic acid copolymers, olefin/dicarboxylic acid copolymers, olefin/acid anhydride copolymers and ionomers. Particularly preferred copolymers are those of an olefin and a copolymerizable monomer containing one or two carboxylic acid groups or an acid anhydride group. Illustrative of suitable acid groups are maleic acid, fumaric acid, acrylic acid, methacrylic acid, itaconic acid, crotonic acid, sorbic acid, mesaconic acid, citraconic acid, angelic acid, vinyl acetic acid and anhydrides thereof. The proportion of the copolymer in the mixture thereof with the polyolefin homopolymer is suitably at least 20 % by weight, more preferably 30-70 % by weight. Such a mixture has a lower melting point than the homopolymer, the layer 2 can be prepared at a lower temperature so that the thermal shrinkage can be reduced. This is advantageous because curls or warps of the composite sheet are minimized. It is preferred that the polyolefin resin have a melt index of 0.01-15 g/10 minutes, more preferably 0.03-10 g/10 minutes, for reasons of preventing the ooze of the resin from the non-woven fabric during the formation of the second layer 2.

The total thickness of the first and second layers 1 and 2 is in the range of 0.1-1 mm, preferably 0.2-0.5 mm. The second layer 2 has a thickness of 10-90 %, preferably 20-70 % of the total thickness. When the total thickness is below 0.1 mm, sound-proofing property, cushioning property, heat-insulating property and adhesiveness become unsatisfactory. Too large a total thickness in excess of 1 mm is undesirable because the delamination strength of the first layer becomes lowered.

Provided on the second layer 2 is a third layer 3 formed of the same polyolefin resin as that of the second layer 2. The third layer 3 and the polyolefin resin layer of the second layer serve as an adhesive for bonding the non-woven fabric layer 1 and a top, fourth layer 4 which is provided over the third layer 3. Thus, it is preferred that the third and fourth layers 3 be selected so that the delamination strength between the third and fourth layers 3 and 4 is at least 10 kg per 25 mm width.

The total thickness of the second and third layers 2 and 3 is in the range of 0.1-2 mm, preferably 0.3-1 mm. When the total thickness is below 0.1 mm, the thickness of the second layer 2 becomes so thin that the bonding between the first layer 1 and the top layer 4 becomes insufficient. When the total thickness is greater than 2 mm, on the other hand, the thickness of the third layer 3 becomes so large that the thermal shrinkage of the third layer caused during the preparation of the composite sheet results in the formation of a considerable warp of the composite sheet with the first, non-woven fabric sheet forming the concaved inside surface. Such a warp causes difficulty in application of the composite sheet to a surface to be bonded because air is apt to be entrapped therebetween.

The fourth, top layer 4 provided over the third layer 3 is formed of a resin containing an ultra-high molecular weight polyethylene (UHPE) having an intrinsic viscosity of at least about 12, preferably 14-30. The content of the UHPE in the fourth layer 4 is generally at least 30 % by weight, preferably at least 50 % by weight.

The fourth layer 4 may contain a polyethylene having an intrinsic viscosity of less than 12, if desired. Further, various additives such as a filler (inclusive of a lubricity imparting filler, an electrical conductivity imparting filler or slippage imparting filler), a stabilizer and a coloring agent. Illustrative of fillers are graphite, carbon black, glass beads, molybdenum disulfide, a fluororesin, an N-acylamino acid, boron nitride, a carbon fiber, a paraffin, a wax, a fatty oil, a fatty acid, a fatty amide, a metal powder and a metal oxide. Examples of the stabilizer include those of hindered amine-type, phenol-type and phosphite-type. The coloring agent may be an inorganic pigment, an organic pigment or a fluorescent dye.

The fourth, UHPE layer 4 has a thickness of at least 0.2 mm, preferably 0.3-5 mm, more preferably 0.5-4 mm. A thickness of the fourth layer 4 of smaller than 0.2 mm is undesirable because the composite sheet tends to warp and to be easily broken. Since the surface of the fourth layer 4 to be contacted with the third layer 3 during the preparation of the composite sheet cannot be easily heated to a desired temperature when the thickness of the fourth layer 4 is increased, 5 mm is the preferred upper limit of the thickness of the fourth layer 4.

The preferred process for the preparation of the composite sheet material according to the present invention will now be described below with reference to Fig. 2. Designated as 11 and 12 are rolls around which a non-woven fabric sheet 10 and a UHPE sheet 20 are wound, respectively. The two sheets 10 and 20 are supplied to a pressing zone defined by a pair of pressure rolls 14 and 15. Before being fed to the pressing zone, the UHPE sheet 20 is preheated with a heater 13 so that the surface thereof has a temperature of 70-140 °C, preferably 80-120 °C. A preheated temperature of at least 70 °C is required in order to obtain firm bonding between the UHPE sheet and the polyolefin resin layer.

Designated as 16 is an extruder within which a molten polyolefin resin is maintained at a temperature of 170-250 °C and from which the molten resin is extruded through a die 17 in the form of a sheet 30 with a thickness of about 0.1-2 mm. The extruded resin sheet 30, which is still hot, is fed between the preheated UHPE sheet 20 and the fabric sheet 10.

Thus, the preheated UHPE sheet 20 and the fabric sheet are fed, with the extruded layer 30 of the molten polyolefin resin being sandwiched therebetween, to the pressing zone defined by the two rollers 14 and 15. The roller 14 which is brought into pressure contact with the non-woven fabric sheet 10 has a temperature of 70-140 °C while the roller 15 which is brought into pressure contact with the preheated UHPE sheet 20 has a temperature of 40-150 °C.

During their passage through the pressing zone, the polyolefin resin layer 30 gradually enters the void space of the fabric layer 10. The gap between the pressure rolls 14 and 15 is so adjusted that the fabric layer 10 is impregnated with the polyolefin resin layer 30 by from 10 to 90 %, preferably from 20 to 70 % of the thickness of the fabric layer 10 (Namely, in Fig. 1, the thickness of the second layer 2 is 10-90 %, preferably 20-70 %, of the total thickness of the first and second layers 1 and 2). The above-described temperature control in each of the preheating, extruding and pressing zones is important to smoothly effect the impregnation of the non-woven fabric sheet 10 with the resin layer 30.

The resulting laminate is then fed to a cooler roll 19 to solidify the polyolefin resin layer 30 so that the UHPE sheet 20 and the non-woven fabric sheet 10 are bonded with the polyolefin resin layer 30, with a portion of the polyolefin resin layer 30 being anchored in the non-woven fabric sheet 10.

Due to thermal shrinkage of the polyolefin resin layer 30, the composite sheet generally tends to spontaneously slightly warp along the process direction (longitudinal direction) with the non-woven fabric sheet 10 forming the inside surface. Namely, in the continuous composite sheet leaving the cooler roller 19 in Fig. 2, the cross section of the composite sheet along a line perpendicular to the longitudinal axis thereof is curved. This is disadvantageous as described previously. Thus, the composite sheet leaving the cooler roll 19 is preferably fed to a warp correction zone composed of, for example, straightening rolls 21 or warp forming rolls, to remove the warp thereof or to forcibly form an inverted warp so that the non-woven fabric sheet 10 forms the outside surface of the warped composite sheet. Such an inversely warped composite sheet has a merit that, when the composite sheet is bonded with an adhesive to a desired surface, air is not entrapped between the non-woven fabric sheet 10 and the surface to be bonded.

Designated as 18 are pinch rolls to permit the sheets 10 and 20 to continuously run at a predetermined linear speed.

For reasons of improved adhesiveness of the non-woven fabric sheet 10 with a surface to which the composite sheet is to be bonded with an adhesive, it is preferred that the outer surface of the non-fabric sheet 10 be treated with flame or UV-rays. Especially, the flame treatment can significantly improve the adhesiveness of the non-woven fabric sheet 10.

Such a flame treatment may be performed by continuously passing the composite sheet over one or more gas burners to which a fuel gas such as liquid petroleum gas is fed together with air. The combustion is performed with an excess air to fuel ratio to effect perfect combustion. Namely, the amount of oxygen (air) fed to the burner should exceed the amount required for perfectly combusting the fuel. The non-woven fabric sheet 10 is contacted with oxidizing flame.

The flame treatment is performed so that the surface of the non-woven fabric sheet 10 is activated. It is preferred that the surface portion of the fabric sheet 10 be melted during the flame treatment. By this, there are formed a number of small depressions or pores on the treated, non-woven fabric surface. Thus, the adhesiveness of the non-woven fabric sheet 10 is improved not merely by an increase of the surface energy but also by the structure of the treated surface. Moreover, surfaces of the polyolefin resin layer 30 which are present at the back of the depressions and pores of the fabric sheet 10 are also activated as a result of the flame treatment, thus contributing to the enhancement of the adhesiveness of the surface of the non-woven fabric sheet 10.

The UV-rays treatment may be performed by irradiating the non-woven fabric sheet 10 with UV-rays having a main wavelength in the range of 300 nm or less. A UV lamp having a synthetic quartz envelop can generate UV-rays with a major wavelength in the vicinity of 185 nm and may be suitably used for the purpose of the present invention. The UV-rays irradiation treatment may be carried out by continuously passing the composite sheet through one or more such UV lamps disposed at a distance of 1-50 cm from the surface of the composite sheet at such a speed as to provide an irradiation time ranging from 20 seconds to 5 minutes.

The treatment with flame or UV-rays of the non-woven fabric sheet 10 with a flame or UV-rays may be carried out before being laminated with the UHPE sheet 20, though it is preferable to effect such a treatment after the formation of the composite sheet. The previously described warp correction treatment may be preceded by the flame or UV-rays treatment.

In bonding of the composite sheet according to the present invention to a surface of an article to be lined, such as skis, an adhesive is applied over the surface of the non-woven fabric sheet and/or the surface of the article. Then the composite sheet is superposed on the article for fixation.

To facilitate the fixation, a metal support is preferably used for supporting the article thereon. In this case, the adhesive tends to exude from the side edges of the laminate and intrude into a space between the metal support and the UHPE sheet. Since the intruding adhesive remains and sticks on the metal support when the article is removed from the metal support, the metal support cannot be reused as such without the removal of the adhesive deposits. Thus, it is preferable to subject the outer surface of the UHPE sheet to a flame or UV-rays irradiation treatment. By this treatment, the adhesive preferentially sticks on the treated surface of the UHPE sheet rather than on the surface of the support, thereby enabling the repeated use of the metal support without cleaning thereof.

The following examples will further illustrate the present invention.

Example 1

A composite sheet as shown in Fig. 1 was prepared from the following raw materials:
(1) Non-woven fabric sheet: formed of Nylon 6 and having a thickness of 0.1 mm, a weight of 40 g/m$^2$ and a delamination strength of 6.26 kg per 25 mm width;
(2) Ultra-high molecular weight polyethylene (UHPE) sheet: non-colored and having a width of 110 mm, a thickness of 1.1 mm, an intrinsic viscosity of 19 (measured by a dekalin solution method at 135 °C) and a molecular weight of 2,560,000. The following relationship exists between the intrinsic viscosity (n) and the molecular weight (M):

$$n = 6.20 \times 10^4 \times M^{0.7}$$

; and
(3) Polyolefin resin: high density polyethylene having a density of 0.96 g/cm$^3$, a Shore hardness of 60, a melt index of 0.18 g/10 minutes and a melting point of 132 °C.

The UHPE sheet was preheated with a hot air to 80 °C and fed, together with the fabric sheet, to a pressing zone defined between a top roll having a surface temperature of 130 °C and a center roll having a surface temperature of 50 °C at a linear speed of 3 m/minute. The UHPE sheet was contacted with the center roll while the fabric sheet was contacted with the top roll. The polyolefin resin was maintained at 230 °C and extruded through a die and the extruded sheet (width: 110 mm) was fed between the UHPE sheet and the fabric sheet at a position upstream of the pressing zone. These sheets were thus bonded with each other with the polyolefin resin serving as an adhesive upon their passage through the pressing zone and cooled by contact with a bottom, cooler roll. The resulting composite sheet was longitudinally cut at both sides with a slitter to a width of 100 mm. The composite sheet had a thickness of 1.45 mm. The fabric sheet was impregnated with the polyolefin resin by a depth of 50 % of its thickness. The physical properties of the composite sheet were as summarized in Table 1.

Example 2

The composite sheet obtained in Example 1 was subjected to a flame treatment. Thus, the non-woven fabric surface of the composite sheet was exposed to a flame of an LPG burner. The surface temperature was found to increase to 120 °C by this flame treatment. The thus treated composite sheet was then cooled by contacting the UHPE surface thereof with a metal pattern (radius of curvature: 60 mm) maintained at 25 °C for simultaneous correction of warps. The resulting sheet had the properties shown in Table 1.

Example 3

Example 1 was repeated in the same manner as described except that (a) a mixture of 60 parts by weight of the high density polyethylene and 40 parts by weight of a carboxyl group-containing polyolefin (melt index: 3.5 g/10 minutes, density: 0.93 g/cm$^3$, melting point: 120 °C) was used as the polyolefin resin, (b) the extrusion temperature was changed to 210 °C, and (c) the UHPE sheet was preheated at 70 °C. The physical properties of the resulting composite sheet are summarized in Table 1.

Example 4

The composite sheet obtained in Example 3 was subjected to a flame treatment and a warp correction treatment in the same manner as that in Example 2. The physical properties of the treated composite sheet are shown in Table 1.

Example 5

Example 1 was repeated in the same manner as described except that the polyolefin resin was incorporated with 0.5 % by weight of an inorganic lavender pigment. The composite sheet was subjected to a flame treatment and a warp correction treatment in the same manner as that in Example 2. The physical properties of the resulting composite sheet are shown in Table 1. The lavender color was able to see through the UHPE sheet of the composite sheet.

Example 6

Example 1 was repeated in the same manner as described except that (a) the polyolefin resin was incorporated with 0.5 % by weight of an inorganic white pigment and (b) the UHPE sheet contained a fluorescent dye. The physical properties of the resulting composite sheet are shown in Table 1. The fluorescent color of the UHPE sheet of the composite sheet was clear and vivid because of the presence of the white polyolefin resin layer.

Example 7

The UHPE surface of the composite sheet obtained in Example 1 was subjected to a flame treatment using an LPG burner. This sheet was then bonded to a metal plated surface using an epoxy resin adhesive with the flame-treated UHPE surface being in contact with the metal surface. Also, the composite sheet without being flame-treated was bonded to similar metal surface. After the adhesive had been hardened, each of the composite sheets was peeled off from the metal surface. The hardened epoxy resin adhesive layer was found to be completely transferred to the flame-treated UHPE surface. On the other hand, part of the adhesive layer remained untransferred on the metal surface in the case of the composite sheet whose UHPE surface had not been subjected to the flame treatment.

Comparative Example 1

Example 1 was repeated in the same manner as described except that the surface temperature of the center roll was lowered to 60 °C. The physical properties of the composite sheet are shown in Table 1.

Comparative Example 2

Example 1 was repeated in the same manner as described except that (a) the surface temperature of the top roll was lowered to 80 °C and (b) the extrusion temperature was changed to 210 °C. The top roll was fouled with the polyolefin resin which oozed from the fabric sheet. The physical properties of the composite sheet are shown in Table 1.

6

Comparative Example 3

Example 1 was repeated in the same manner as described except that the surface temperature of the top roll was increased to 150 °C. The top roll was fouled with the polyolefin resin which oozed from the fabric sheet. The physical properties of the composite sheet are shown in Table 1.

Comparative Example 4

Example 1 was repeated in the same manner as described except that a UHPE sheet having a thickness of 0.13 mm was used. The physical properties of the composite sheet are shown in Table 1.

Comparative Example 5

Example 1 was repeated in the same manner as described except that the non-woven fabric sheet was omitted. The physical properties of the composite sheet are shown in Table 1.

Comparative Example 6

The high density polyethylene surface of the composite sheet obtained in Comparative Example 5 was subjected to a flame treatment using an LPG burner. Two such treated sheets were bonded with each other with the respective treated polyethylene surfaces being in contact with each other.

In Table 1, the bonding strength between the UHPE layer and the polyolefin resin layer is as measured by the following method: Sample composite sheet is cut to a strip having a width of 25 mm. The two layers are then drawn in opposite directions for peeling off from each other. The peel strength represents the bonding strength. The degree of warp is measured as follows: Sample composite sheet is cut to a size of 100 mm x 100 mm. The cut sample is placed on a flat plate with the concaved inside surface being oriented downward. The maximum height of the apex of the outer surface of the sample from the surface of the plate is measured. When the concaved inside surface is the UHPE layer, the vertical distance is expressed as a negative value in Table 1. In the present invention, a degree of warp of -2.5 to 0 mm, especially -2.0 to -0.5 mm is preferable.

Table 1

| Example No. | 1 | 2 | 3 | 4 | 5 | 6 |
|---|---|---|---|---|---|---|
| Preheated Temperature of UHPE Sheet (°C) | 80 | 80 | 70 | 70 | 80 | 80 |
| Extrusion Temperature of Polyethylene Resin (°C) | 230 | 230 | 210 | 210 | 230 | 230 |
| Temperature of Top Roll (°C) | 130 | 130 | 130 | 130 | 130 | 130 |
| Thickness of UHPE Sheet (mm) | 1.1 | 1.1 | 1.1 | 1.1 | 1.1 | 1.1 |
| Thickness of Polyethylene Layer (mm)** | 0.30 | 0.30 | 0.30 | 0.30 | 0.35 | 0.35 |
| Total Thickness of Composite Sheet (mm) | 1.45 | 1.45 | 1.45 | 1.45 | 1.50 | 1.50 |
| Depth of Impregnation of Fabric Sheet with Polyethylene Resin (%) | 50 | 50 | 50 | 50 | 50 | 50 |
| Bonding Strength between UHPE Sheet & Polyethylene Resin Layer (Kg/25 mm) | >13* | >13* | >13* | >13* | >13* | >13* |
| Flame Treatment | no | yes | no | yes | yes | yes |
| Bonding Strength of Fabric Sheet (Kg/25 mm) | 6.0 | 15.0 | 7.0 | 15.5 | 15.0 | 14.0 |
| Warp Correction Treatment | no | yes | no | yes | yes | yes |
| Degree of Warp (mm) | 4.0 | -0.5 | 3.5 | -1.5 | -1.0 | -1.5 |
| Fouling of Roll | no | no | no | no | no | no |

    *:   The polyethylene resin layer was broken.

    **:   Inclusive of the portion of the polyethylene resin anchored in the non-woven fabric sheet.

Table 2

| Comparative Example No. | 1 | 2 | 3 | 4 | 5 | 6 |
|---|---|---|---|---|---|---|
| Preheated Temperature of UHPE Sheet (°C) | 60 | 80 | 70 | 70 | 80 | 80 |
| Extrusion Temperature of Polyethylene Resin (°C) | 230 | 210 | 210 | 210 | 230 | 230 |
| Temperature of Top Roll (°C) | 130 | 80 | 150 | 130 | 130 | 130 |
| Thickness of UHPE Sheet (mm) | 1.1 | 1.1 | 0.13 | 1.1 | 1.1 | 1.1 |
| Thickness of Polyethylene Layer (mm)** | 0.30 | 0.20 | 0.25 | 0.27 | 0.25 | 0.25 |
| Total Thickness of Composite Sheet (mm) | 1.45 | 1.40 | 1.35 | 0.45 | 1.35 | 1.35 |
| Depth of Impregnation of Fabric Sheet with Polyethylene Resin (%) | 50 | 100 | 100 | 50 | – | – |
| Bonding Strength between UHPE Sheet & Polyethylene Resin Layer (Kg/25 mm) | 0.45 | 0.35 | 0.65 | 4.50 | >13* | >13* |
| Flame Treatment | no | no | no | no | no | yes |
| Bonding Strength of Fabric Sheet (Kg/25 mm) | *** | *** | *** | *** | 0.35 | 3.45 |
| Warp Correction Treatment | no | no | no | no | no | no |
| Degree of Warp (mm) | 4.0 | 3.5 | 6.0 | 30.0 | 2.0 | 3.0 |
| Fouling of Roll | no | yes | yes | no | yes | yes |

* : The polyethylene resin layer was broken.

** : Inclusive of the portion of the polyethylene resin anchored in the non-woven fabric sheet.

*** : Breakage occurred between the UHPE sheet and the polyethylene resin layer rather than between the non-woven fabric layers.

**Claims**

1. A composite material comprising:

    a first layer of a non-woven fabric;

    a second layer provided on one of the opposite two surfaces of said first layer and formed of the same non-woven fabric as that of said first layer, said second layer being impregnated throughout with a polyolefin resin having an intrinsic viscosity of 3-10, wherein the total thickness of said first and second layers is in the range of 0.1-1 mm with said second layer having a thickness of 10-90 % of the total thickness;

    a third layer provided on said second layer and formed of the same polyolefin resin as that of said second layer, wherein the total thickness of said second and third layers is in the range of 0.1-2 mm; and

    a fourth layer provided over said third layer and formed of an ultra-high molecular weight polyethylene having an intrinsic viscosity of at least about 12, said fourth layer having a thickness in the range of at least 0.2 mm.

2. A composite material as claimed in claim 1, wherein said non-woven fabric is made of a synthetic fiber selected from the group consisting of polyester fibers, polyamide fibers and polyvinyl alcohol fibers.

3. A composite material as claimed in claim 1, wherein said non-woven fabric has a delamination strength of at least 1 kg per 25 mm width and a weight of 20-150 g/m$^2$.

4. A composite material as claimed in claim 1, wherein said polyolefin resin is a polyolefin homopolymer or a mixture of a polyolefin homopolymer with a copolymer of an olefin and a copolymerizable monomer.

5. A composite material as claimed in claim 4, wherein said polyolefin homopolymer is a high density polyethylene.

6. A composite material as claimed in claim 4, wherein said copolymerizable monomer contains one or two carboxylic acid groups or an acid anhydride group.

7. A composite material as claimed in claim 1, wherein the delamination strength between said third and fourth layers is at least 10 kg per 25 mm width.

8. A composite material as claimed in claim 2, wherein the outer surface of said first layer has been subjected to a flame treatment to increase the surface energy thereof.

9. A composite material as claimed in claim 1, wherein the outer surface of said first layer has been subjected to a UV-rays irradiation treatment to increase the surface energy thereof.

10. A composite material as claimed in claim 1, wherein the outer surface of at least one of said first and fourth layers has been subjected to a flame treatment or a UV-rays irradiation treatment to increase the surface energy thereof.

11. A composite material as claimed in claim 1, wherein the non-woven fabrics of said first and second layers are continuous.

12. A composite material as claimed in claim 1, which is elongated and longitudinally warped with said first layer forming the outer surface.

13. A process for the production of a composite material, comprising the steps of:

    (a) preheating an ultra-high molecular weight polyethylene sheet having opposite two, first and second surfaces such that said first surface thereof has a temperature of 70-140 °C;

    (b) providing a sheet of a non-woven fabric having opposite two, first and second surfaces;

    (c) extruding a molten polyolefin resin having a temperature of 170-250 °C through a die to form an extruded layer of the polyolefin resin and feeding the extruded layer between said preheated sheet and said sheet of a non-woven fabric to obtain a laminate in which said extruded layer is in contact with said first surface of said ultra-high molecular weight polyethylene sheet and said first surface of said non-woven fabric sheet; and

(d) feeding said laminate to a pressing zone defined by a pair of first and second rollers, wherein the surface of said first roller has a temperature of 70-140 °C and is brought into pressure contact with said second surface of said non-woven fabric sheet and the surface of said second roller has a temperature of 40-150 °C and is brought into pressure contact with said second surface of said ultra-high molecular weight polyethylene sheet, so that said ultra-high molecular weight polyethylene sheet and said non-woven fabric sheet are bonded with said polyolefin resin layer to form a composite sheet in which a portion of said polyolefin resin layer is anchored in said non-woven fabric sheet.

14. A process as claimed in claim 13, further comprising subjecting said second surface of said non-woven fabric sheet to a flame treatment.

15. A process as claimed in claim 13, further comprising subjecting said second surface of said ultra-high molecular weight polyethylene sheet to a flame treatment or a UV-rays irradiation treatment.

16. A process as claimed in claim 13, further comprising subjecting said second surface of said non-woven fabric sheet to a UV-rays irradiation treatment.

17. A process as claimed in claim 13, wherein said ultrahigh molecular weight polyethylene sheet has a thickness of 0.2 mm or more, said non-woven fabric sheet has a delamination strength of at least 1 kg per 25 mm width and a weight of 20-150 g/m$^2$ and said polyolefin resin has a melt flow index of 0.01-5 g/10 minutes.

18. A process as claimed in claim 13, wherein said extruded layer has a thickness of 0.1-2 mm.

19. A process as claimed in claim 13, wherein step (d) is performed so that said polyolefin resin layer is anchored in said non-woven fabric sheet in a depth of 10-90 % of the thickness of said non-woven fabric sheet.

20. A process as claimed in claim 13, wherein said composite sheet is elongated and said process further comprising, after step (d), longitudinally folding said composite sheet such that said second surface of said non-woven fabric sheet forms the outer surface.

21. A composite material obtained by the process according to any one of Claims 13 to 20.

# F I G. I

# F I G. 2

30 EXTRUDED RESIN
14 PRESSURE ROLL
10 NON-WOVEN FABRIC

16 EXTRUDER
17 DIE

11 ROLL

21 STRAIGHTENING ROLLS

15 PRESSURE ROLL

18 PINCH ROLLS

19 COOLER ROLL

13 HEATER
20 POLYETHYLENE SHEET

12 ROLL